(19) Europäisches Patentamt / European Patent Office / Office européen des brevets

(11) **EP 4 216 308 A1**

(12) **EUROPEAN PATENT APPLICATION**

(43) Date of publication:
**26.07.2023 Bulletin 2023/30**

(21) Application number: **22217034.2**

(22) Date of filing: **28.12.2022**

(51) International Patent Classification (IPC):
**H01M 4/36** (2006.01)     **H01M 4/525** (2010.01)

(52) Cooperative Patent Classification (CPC):
**C01G 53/50; C01G 53/42; H01M 4/362;**
**H01M 4/364; H01M 4/525;** C01P 2002/52;
C01P 2002/54; C01P 2002/72; C01P 2004/61;
C01P 2004/80; C01P 2006/11; C01P 2006/12;
C01P 2006/14; C01P 2006/16; C01P 2006/17;

(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:   **31.12.2021   CN 202111662231**

(71) Applicant: **Guizhou Zhenhua E-CHEM Inc.**
**Guiyang City, Guizhou 550014 (CN)**

(72) Inventors:
• **ZHOU, Chaoyi**
  **Guiyang City, 550014 (CN)**

• **YU, Ye**
  **Guiyang City, 550014 (CN)**
• **HUANG, Jin**
  **Guiyang City, 550014 (CN)**
• **WANG, Lijuan**
  **Guiyang City, 550014 (CN)**
• **XIANG, Qianxin**
  **Guiyang City, 550014 (CN)**
• **LI, Lu**
  **Guiyang City, 550014 (CN)**
• **MEI, Ming**
  **Guiyang City, 550014 (CN)**

(74) Representative: **Dehns**
**St. Bride's House**
**10 Salisbury Square**
**London EC4Y 8JD (GB)**

(54) **HIGH-NICKEL CATHODE MATERIAL FOR A LITHIUM ION BATTERY AND PREPARATION METHOD AND APPLICATION THEREOF**

(57)     The present invention belongs to the technical field of lithium ion batteries, and relates to a high-nickel cathode material for lithium ion batteries and a preparation method and application thereof. It contains elements shown in and constituting the chemical formula 1 thereof $Li_{1+a}Ni_bMn_cA_dO_2$, where $0.01 \leq a \leq 0.24$, $0.79 < b < 0.96$, $0.01 < c \leq 0.20$, $0 < d < 0.06$; and A is selected from any one or two or more of Mn, Co, Al, Zr, Y, Rb, Cs, W, Ce, Mo, Ba, Ti, Mg, Ta, Nb, Ca, V, Sc, Sr and B, or from a phosphorus-containing compound containing at least one of Ti, Al, Mg, Zr, La and Li. The high-nickel cathode material of the lithium ion battery of the present invention has better cycling performance, higher capacity, and a relatively small increase in resistance during cycling of the battery.

Fig. 1

EP 4 216 308 A1

(52) Cooperative Patent Classification (CPC): (Cont.)
C01P 2006/40; C01P 2006/80

**Description**

**Technical Field**

The present invention belongs to the technical field of lithium ion batteries, and relates to a high-nickel cathode material for lithium ion batteries and a preparation method and application thereof.

**Background Art**

In 2019, the new energy market has witnessed dramatic changes. The growing number of electric vehicles has increased the demand for energy density and cost performance of lithium ion batteries. In the lithium-cobalt-nickel-manganese ternary cathode material, cobalt is a scarce resource and has a high price. In order to improve the performance-price ratio while pursuing high energy density, the content of nickel or manganese element is appropriately increased, so as to reduce the amount of cobalt. Increasing the nickel content can provide a high-capacity battery. However, the nickel content increases, the structure of the material is unstable. A reaction occurs between the solution and the electrolyte solution. Due to repeated charge and discharge, cracks are generated in the cathode material, which deteriorates the cycle life of the lithium ion battery, increases the impedance and decreases the capacity. Therefore, there is a need to develop new materials or to find new materials to replace the scarce source cobalt or to reduce the amount of cobalt in the material.

Chinese patent CN102280636A discloses a cathode active material, a preparation method thereof and a rechargeable lithium battery including the same. The cathode active material of the rechargeable lithium battery is obtained by preparing a precursor by a co-precipitation method and then mixing and sintering the precursor with a lithium source. The material has pores having an average diameter of about 10 nm to about 60 nm, and the porosity of the material is about 0.5% to about 20%. The material has a good particle strength so as to prevent or reduce the occurrence of crushing after extrusion. The material tends not to react with an electrolyte and exhibit good thermal stability, thereby providing a high-capacity rechargeable lithium battery. However, the chemical formula of this material, $Li_aNi_xCo_yMn_zM_kO_2$, of which $0.45 \leq x \leq 0.65$, $0.15 \leq y \leq 0.25$, $0.15 < z \leq 0.35$, has a high cobalt content, insufficient capacity, and a performance-price ratio which cannot meet the requirements.

Chinese Patent CN108123119A discloses a nickel-based active material for a lithium secondary battery, a method for preparing the same, and the lithium secondary battery including a cathode containing the same. It reports that a nickel-based active material is obtained by treating a mixture of a lithium precursor and a metal hydroxide at a low temperature and then heat-treating at a high temperature under an oxygen atmosphere. The nickel-based active material may contain secondary particles including an agglomerate of at least two plate-like primary particles, wherein at least part of the secondary particles has a structure in which the plate-like primary particles are arranged radially. It also gives a material in which the porosity of the outside of the secondary particle is greater than the porosity of the inside of the secondary particle. However, the patent does not indicate what kind of the problem is improved.

Chinese patent CN1856890 discloses a lithium composite oxide particle for a lithium secondary battery cathode material, a lithium secondary battery cathode using the particle, and the lithium secondary battery. It reports a lithium composite oxide particle for a lithium secondary battery electrode material capable of enhancing low-temperature load characteristics of a battery and also enhancing coatability when manufacturing a cathode. The material satisfies the following condition (A) and simultaneously satisfies at least one of the following conditions (B) and (C) in the determination according to the mercury intrusion method. Condition (A): the pressure on the mercury intrusion curve is less than or equal to 0.02 $cm^3$/g when the pressure is increased from 50 MPa to 150 MPa. Condition (B): the pressure on the mercury intrusion curve is greater than or equal to 0.01 $cm^3$/g when the pressure is increased from 50 MPa to 150 MPa. Condition (C): the average pore radius is 10 nm to 100 nm, and the pore size distribution curve has a main peak with a peak top at a pore radius of 0.5 $\mu$m to 50 $\mu$m and a sub-peak with a peak top at a pore radius of 80nm to 300nm. This patent primarily addresses low temperature performance, but fails to compromise high temperature performance.

Chinese Patent No. CN104272520A discloses a non-aqueous electrolyte secondary battery and a manufacturing method thereof, and reports that a cathode mixed material layer constituting a cathode of the non-aqueous electrolyte secondary battery has, in a pore size distribution curve measured by a mercury porosimeter, a peak A having a differential pore capacity in a range of 0.05 $\mu$m to 2 $\mu$m and a peak B located at a position closer to a small pore diameter side than the peak A. The pore size distribution curve has a minimum point C between the peak A and the peak B at which the differential pore capacity becomes a minimum value. A ratio (XC/XL) of a differential pore volume $X_L$ of a larger one of the differential pore volume $X_A$ of the peak A and the differential pore volume $X_B$ of the peak B to a differential pore volume $X_C$ of the minimum point C is 0.6 or more. This patent mainly addresses the problem of reducing the gassing of the battery by adding an overcharge additive during the manufacture of the battery.

Chinese patent CN112993239A discloses a high-pressure resistant low-cobalt ternary cathode material and a preparation method thereof. The cathode material is prepared from a precursor containing nickel, cobalt and manganese, a lithium source and an additive containing a metal element, wherein $(Ni_{0.5}Co_{0.1}Mn_{0.4})(OH)_2$ is mainly used as the precursor and the material is prepared at low temperature, medium temperature and high temperature. The morphology of the cathode material is regular and the particle size is uniform. The lithium ion battery prepared from the material still has a low internal resistance under high pressure and an excellent high-temperature cycle performance. However, the capacity of this material is low and cannot meet the application requirements.

Chinese patent CN108963218A A discloses a method for preparing a low-cobalt high-nickel ternary lithium and application thereof. In the cathode material, nickel nitrate, titanium nitrate and manganese nitrate are mixed into an aqueous solution at a molar ratio of 8.75 : 0.25 : 1 to be sprayed and dried to obtain a precursor. Then the exchange of titanium and cobalt is initiated by a traction agent. A suspension is prepared from the precursor, the traction agent and lithium hydroxide at a certain molar ratio, sprayed, dried and then calcined to obtain the product. This material greatly improves its thermal stability, cycle life, and safety while further reducing the cobalt content. However, the finished product of this material is mainly made by one-time sintering, with the sintering time limited, which cannot provide sufficient time and kinetic energy. The structure of the material cannot be well synthesized, and the cycle performance and thermal stability cannot be ensured.

Chinese patent CN112811475A discloses a single crystal cathode material, a preparation method thereof and a lithium ion battery. The patent reports that a single crystal precursor is obtained by subjecting large particles of a polycrystalline precursor to gas-flow pulverization, and the cathode material is obtained by sintering after lithium matching. The process is simple, and has reduced production cost compared with the wet process. The finished product of this material is made only by one-time sintering, with the sintering time limited, which cannot provide sufficient time and kinetic energy. The structure of the material cannot be well synthesized, and the cycle performance and thermal stability cannot be ensured

Chinese patent CN112750999A discloses a cathode material, a preparation method thereof and a lithium ion battery. The cathode material includes a high-nickel cobalt-free multi-component cathode material intermediate and a cobalt-containing compound coated on the outer surface of the high-nickel cobalt-free multi-component cathode material intermediate. The content of the cobalt compound, calculated as cobalt element, is 0.5-5 mol% of the total number of moles of nickel and manganese. The material prepared by the method has a stable structure, a high energy density, a good rate capability and a high capacity retention ratio. However, the free lithium of this material is high, and the gelation phenomenon may occur in the pulping process of battery, which affects the battery processing.

**Summary of the Invention**

With the decrease of cobalt content, especially for cobalt-free materials, the structural stability of ternary materials becomes worse, so that the capacity, rate and cycle performance of the materials cannot be played normally. Therefore, different strategies are proposed according to different requirements. Large single crystal materials are obtained by high temperature sintering for those with high cycling and safety requirements. For those with high rate requirements, secondary particles with very small primary particles are obtained by low temperature sintering. However, such a strategy always has a weakness during the actual use of the battery.

The technical problem to be solved by the present invention is that cobalt-free cathode materials in the prior art cannot combine high rate performance, high capacity, and long cycle and low DC internal resistance. The present invention provides a high-nickel cathode material for lithium ion batteries and a preparation method thereof. The present invention prepares a high-nickel cathode material for lithium ion batteries by adding a modifying element and at least two sintering and one coating treatments. The cathode material has a porous structure, and provides more paths for the migration of lithium ions and has a shorter path, so that the lithium ion battery not only has a higher capacity, but also has a good rate capability. The lithium ion battery also has a good structural stability. During the charging and discharging process of the lithium ion battery, the capacity decline is reduced, the cycle performance is good, and the increase of direct current internal resistance is small. The present invention also provides a cathode comprising the above-mentioned lithium ion cathode material and a lithium ion battery. The present invention also provides an application of the above-mentioned high-nickel cathode material for lithium ion batteries, or the above-mentioned cathode for lithium ion batteries, or the lithium ion battery, in the field of digital batteries, power batteries or energy storage batteries.

Technical Solutions of the Invention

The present invention provides a high-nickel cathode material for lithium ion batteries, the high-nickel cathode material having a porous structure.

It contains elements shown in and constituting $Li_{1+a}Ni_bMn_cA_dO_2$, where $0.01 \leq a \leq 0.24$, $0.79 < b < 0.96$, $0.01 \leq c \leq 0.20$, $0 < d < 0.06$; and A is selected from any one or two or more of Mn, Co, Al, Zr, Y, Rb, Cs, W, Ce, Mo, Ba, Ti, Mg, Ta, Nb, Ca, V, Sc, Sr and B, or from a phosphorus-containing compound containing at least one of Ti, Al, Mg, Zr, La and Li.

Preferably, a BJH pore size distribution curve has a unimodal or multimodal pore size distribution in the range of pore sizes 1.5-20 nm, when measured by the nitrogen adsorption; and the high-nickel cathode material has a single point adsorption total pore volume within 0.01 g/cm$^3$, preferably within 0.007 g/cm$^3$, in the range of pore sizes 1.5-20 nm.

Preferably, the cathode material has a half-peak width FWHM (101) of 0.080-0.180 at a diffraction peak close to (101) a diffraction angle 2Θ of 36.6° in a powder X-ray diffraction pattern.

Preferably, the cathode material $D_V50$ has a particle size of 3-20 μm.

Preferably, the cathode material has a specific surface area of 0.33-1.5 m$^2$/g; and/or

the cathode material has a tap density of ≥ 1.9 g/cm$^3$; and/or

the cathode material has a total free lithium content of < 1800 ppm.

Preferably, in the chemical formula 1, 0.001 ≤ d ≤ 0.04.

The present invention also provides a preparation method for the high-nickel cathode material for lithium ion batteries. The method comprises at least two sintering and one coating treatment after mixing raw materials.

Preferably, the first sintering temperature is 700-900°C, preferably 790-890°C; further preferably, the constant temperature time is 8-40 hours; and/or

the second sintering temperature is 400°C-800°C, preferably 680°C-800°C; further preferably, the constant temperature time is 5-20 hours;

more preferably, the sintering atmosphere is oxygen.

Preferably, the coating treatment is performed before the final sintering.

Preferably, according to the above preparation method, a Li source is a lithium-containing oxide, a lithium-containing fluoride, or a lithium-containing salt; preferably the Li source is one or two or more selected from the group consisting of anhydrous lithium hydroxide, lithium hydroxide monohydrate, lithium carbonate, lithium nitrate, lithium acetate, and lithium fluoride.

Preferably, the precursor in raw materials has a $D_V50$ particle size of 2.0-20 μm.

The present invention also provides a high-nickel cathode material for lithium ion batteries, which is prepared by the above-mentioned preparation method.

The present invention also provides a high-nickel cathode material for lithium ion batteries, comprising two or more of the above cathode materials.

The present invention also provides a cathode for lithium ion batteries, comprising a current collector and a cathode material loaded on the current collector, wherein the cathode material is the high-nickel cathode material for lithium ion batteries as described above.

The present invention also provides a lithium ion battery comprising a cathode, an anode, and an electrolyte containing a lithium salt, wherein the cathode is the lithium ion battery cathode as described above.

The present invention also provides an application of the above-mentioned high-nickel cathode material for lithium ion batteries, or the above-mentioned cathode for lithium ion batteries, or the above-mentioned lithium ion battery, in the field of digital batteries, power batteries or energy storage batteries.

Advantageous Effects of the Invention

Compared with a conventional cathode material for lithium ion batteries, a cobalt-free high-nickel cathode material for lithium ion batteries is obtained by adding a modifying element and at least two sintering and one coating treatments. The high-nickel cathode material has a unique porous structure and crystal structure, the porous structure of the cathode material provides more paths for the migration of lithium ions and has a shorter path, so that the lithium ion battery has not only a higher capacity and a good rate performance, but also the crystal structure enables the material to have a good structural stability. Therefore, during the charging and discharging process of the lithium ion battery, the capacity decline is reduced, the cycle performance is good, and the increase of direct current internal resistance is small. The capacity, rate and cycle performance of the cobalt-free cathode material are effectively balanced.

**Brief Description of the Drawings**

Fig. 1 shows distribution curves of the pore size of a high-nickel cathode material prepared in Example 7.

Fig. 2 is an X-ray diffraction diagram of the high-nickel cathode material prepared in Example 6.

**Detailed Description of the Invention**

In order to make the objects, technical solutions and technical effects of the embodiments of the present invention clearer, the technical solutions of the embodiments of the present invention are described clearly and completely. The embodiments described below are some, but not all embodiments of the invention. All other embodiments which can be obtained by a person skilled in the art without inventive effort in combination with the embodiments of the present invention are within the scope of the present invention.

In the description of the present invention, the term "multimodal" refers to a pore size distribution including two or more pore volume maxima on a BJH pore size distribution curve, typically the maximum of the pore volume being $0.0008 \ g/cm^3$ or even more.

In the description of the present invention, the term "unimodal" refers to a pore size distribution including one pore volume maximum on the BJH pore size distribution curve, typically the maximum of the pore volume being $0.0008 \ g/cm^3$ or even more.

In order that the foregoing may be better understood, the present invention is described in further detail below.

The present invention provides a high-nickel cathode material for lithium ion batteries. The high-nickel cathode material has a porous structure, and contains elements shown in and constituting the chemical formula 1 thereof $Li_{1+a}Ni_bMn_cA_dO_2$, where $0.01 \leq a \leq 0.24$, $0.79 < b < 0.96$, $0.01 < c < 0.20$, $0 < d < 0.06$; and A is selected from any one or two or more of Mn, Co, Al, Zr, Y, Rb, Cs, W, Ce, Mo, Ba, Ti, Mg, Ta, Nb, Ca, V, Sc, Sr and B, or from a phosphorus-containing compound containing at least one of Ti, Al, Mg, Zr, La and Li.

It should be noted that the phosphorous-containing compound includes but is not limited to one or more of $Li_3PO_4$, titanium aluminum lithium phosphate (LATP) or [LiAlXTi (2-X) (PO4) 3].

In a preferred embodiment of the present invention, a BJH pore size distribution curve has a unimodal or multimodal pore size distribution in the range of pore sizes 1.5-20 nm, when measured by the nitrogen adsorption; and the high-nickel cathode material has a single point adsorption total pore volume within $0.01 \ g/cm^3$, preferably within $0.007 \ g/cm^3$, in the range of pore sizes 1.5-20 nm.

In yet another preferred embodiment of the present invention, the cathode material has a half-peak width FWHM (101) of 0.080-0.180 at a diffraction peak close to (101) a diffraction angle $2\Theta$ of 36.6° in a powder X-ray diffraction pattern.

In yet another preferred embodiment of the present invention, the high-nickel cathode material has a $D_V50$ particle size of 3-20 $\mu$m.

In still another preferred embodiment of the present invention, the high-nickel cathode material has a specific surface area of 0.33 to 1.5 $m^2/g$; and/or

the high-nickel cathode material has a tap density of $\geq 1.9 \ g/cm^3$; and/or
the high-nickel cathode material has a total free lithium content of <1800 ppm.

In still another preferred embodiment of the present invention, in the chemical formula 1, $0.001 \leq d \leq 0.04$.

The present invention also provides a method for preparing the above-mentioned cathode material for lithium ion batteries. The method includes at least two sintering and one coating treatment after mixing raw materials.

The raw materials include a Li source, a metal A source, and a nickel manganese hydroxide precursor.

In a preferred embodiment of the invention, the first sintering temperature is 700°C-900°C, preferably 790°C-890°C; further preferably, the constant temperature time is 8-40 hours; and/or the second sintering temperature is 400°C-800°C, preferably 680°C-800°C; further preferably, the constant temperature time is 5-20 hours; more preferably, the sintering atmosphere is oxygen.

In a preferred embodiment of the present invention, according to the preparation method for a high-nickel cathode material for lithium ion batteries as described above, the coating treatment is performed before the final sintering.

In still another preferred embodiment of the present invention, according to the above-mentioned preparation method, a Li source is a lithium-containing oxide, a lithium-containing fluoride, or a lithium-containing salt; preferably the Li source is one or two or more selected from the group consisting of anhydrous lithium hydroxide, lithium hydroxide monohydrate, lithium carbonate, lithium nitrate, lithium acetate, and lithium fluoride.

In yet another preferred embodiment of the present invention, the precursor in raw materials has a $D_V50$ particle size of 2.0-20 $\mu$m.

The present invention also provides a high-nickel cathode material for lithium ion batteries, which is prepared by the above-mentioned preparation method.

The present invention also provides a high-nickel cathode material for lithium ion batteries, comprising two or more of the above cathode materials.

The present invention also provides a cathode for lithium ion batteries, comprising a current collector and a cathode material loaded on the current collector, wherein the cathode material is the high-nickel cathode material for lithium ion batteries as described above.

The present invention also provides a lithium ion battery comprising a cathode, an anode, and an electrolyte containing a lithium salt, wherein the cathode is the lithium ion battery cathode as described above.

The lithium ion battery of the present invention further includes a diaphragm and an aluminum-plastic film. Specifically, the electrode includes a cathode and an anode. The cathode is made of a material including a cathode current collector and a cathode active substance coated on the cathode current collector, and a binder, a conductive aid, etc. The cathode active substance is the above-mentioned lithium ion cathode material. The anode is made of a material including a current collector and an anode active substance coated on the current collector, and a binder, a conductive aid, etc. The diaphragm is a PP/PE thin film conventionally used in the art for separating a cathode and an anode from each other. The aluminum-plastic film is a container for a cathode, an anode, a diaphragm, and an electrolyte.

The binder includes polyvinyl alcohol, carboxymethyl cellulose, hydroxypropyl cellulose, polyvinyl chloride, carboxylated polyvinyl chloride, polyvinyl fluoride, ethylidene oxide-containing polymer, polyvinyl pyrrolidone, polyurethane, polytetrafluoro ethylene, polyvinylidene fluoride, polyethylene, polypropylene, styrene-butadiene rubber, acrylated styrene-butadiene rubber, epoxy resin, nylon, etc. and combinations thereof, which functions to improve adhesion characteristics of the cathode active material particles to each other and the cathode active material particles to the current collector.

The conductive aid includes one or two or more of a carbon-based material, a metal-based material, and a conductive polymer. The carbon-based material is one or two or more of natural graphite, artificial graphite, carbon black, acetylene black, ketjen black or carbon fibe. The metal-based material is a metal powder or a metal fiber of copper, nickel, aluminum or silver. The conductive polymer is a polyphenylene derivative.

The present invention also provides an application of the above-mentioned high-nickel cathode material for lithium ion batteries, or the above-mentioned cathode for lithium ion batteries, or the above-mentioned lithium ion battery, in the field of digital batteries, power batteries or energy storage batteries.

Benefits of the present invention are further illustrated by the following specific examples.

Each of the reagents and equipment information used in the following examples are shown in Tables 1 and 2.

Table 1 Reagent information used in the examples

| Reagent Name | Grade | Type | Vendor |
|---|---|---|---|
| Tungsten oxide | Ceramic grade | --- | Anhui Xuancheng Jingrui New Material Co. Ltd. |
| Rubidium carbonate | Ceramic grade | --- | Anhui Xuancheng Jingrui New Material Co. Ltd. |
| Magnesium acetate | Reagent grade | --- | Guizhou Tianlihe Chemical Co. Ltd. |
| Strontium carbonate | Reagent grade | --- | Guizhou Tianlihe Chemical Co. Ltd. |
| Cerium oxide | Ceramic grade | --- | Anhui Xuancheng Jingrui New Material Co. Ltd. |
| Cobalt oxide | Reagent grade | --- | Guizhou Tianlihe Chemical Co. Ltd. |
| Cobalt carbonate | Reagent grade | --- | Guizhou Tianlihe Chemical Co. Ltd. |
| Boron trioxide | Reagent grade | --- | Nanjing Chemical Reagent Factory |
| Ammonium heptamolybdate | Battery grade | 99.50% | Dalian No. 1 Organic Chemical Co. Ltd. |
| Tetrabutyl titanate | Reagent grade | 99.80% | Nanjing Chemical Reagent Factory |
| Aluminum nitrate nonahydrate | Battery grade | 99.50% | Dalian No. 1 Organic Chemical Co. Ltd. |

(continued)

| Reagent Name | Grade | Type | Vendor |
|---|---|---|---|
| Anhydrous lithium hydroxide | Battery grade | 99.5 wt% | Sichuan Yahua Lithium Industry Technology Co. Ltd. |
| Lithium hydroxide monohydrate | Battery grade | 56.0 wt% | Jiangxi Ganfeng Lithium Industry Co. Ltd. |
| High purity oxygen | Industrial grade | Purity 99.9% | Guizhou Yagang Gas Co. Ltd |
| Conductive carbon black | Battery grade | Super P Li | Switzerland TIMCAL Co. Ltd. |
| N-methyl pyrrolidone | Battery grade | Content 99.5% | Jiangsu Nanjing Jinlong Chemical Plant |
| Polyvinylidene fluoride | Battery grade | Solef 6020 | Solvay Chemical Company, US |
| Aluminium foil | Battery grade | Thickness 16 $\mu$m | Aluminum Company, US |
| Electronic adhesive tape | Electronic grade | Green width 10 mm | 3M Company |
| Lithium sheet | Electronic grade | Diameter $\Phi$20 mm, purity $\geq$ 99.9% | Shanghai Shunyou Metal Material Co. Ltd. |
| Electrolyte | Electronic grade | LIB301, propylene carbonate (PC): ethylene carbonate (EC): diethyl carbonate (DEC) = 1 : 1 : 1 (volume ratio), lithium salt LiPF6 concentration: 1 mol/L | Shenzhen Xinzhoubang Corporation |
| Diaphragm | ---- | PP/PE/PP tri-layer material, Celgard M825, thickness 16 $\mu$m. | Celgard Company, US |
| Aluminum-plastic film | Industrial grade | Total thickness 160 $\mu$m | DNP Corporation, Japan |

Table 2 Equipment information used in the examples

| Equipment Name | Type | Manufacturer |
|---|---|---|
| Laser particle size analyzer | MSU2000 | Malvern Instruments Co. Ltd. Of UK |
| Mac Automatic Specific Surface and Porosity Analyzer | TriStar II 3020 | Mikete |
| X-ray diffraction | X'Pert PRO MPD | PANalytical |
| Inductively coupled plasma emission spectrometer | iCAP-7400 | Thermo Electron, US |
| High constant temperature formation system | LIP-3AHB06 | Zhejiang Hangke Technology Limited Liability Company |
| High-efficiency vacuum drying box | KP-BAK-03E-02 | Dongguan Kerui Electromechanic Industry Company |
| Jet mill | MX-50 | Yixing Juneng Grinding Equipment Company |
| Roller kiln Tap density instrument | 36 meters BT-303 | Huayou New Energy Kiln Equipment Company Dandong Bettersize instruments Ltd. |

(continued)

| Equipment Name | Type | Manufacturer |
|---|---|---|
| Stirring tank | / | Guizhou Tianlihe Chemical Co. Ltd. |

**Example 1**

Material mixing. It starts to stir in a 200L plow mixer. 31.78 kg of anhydrous lithium hydroxide, 3.44 kg of cerium oxide and 100 kg of nickel manganese hydroxide precursor $Ni_{0.9}Mn_{0.1}(OH)_2$ with a particle size $D_v50$ of 8.5 $\mu$m (available from Guangdong Yingde Jiana Energy Comany) are added, and stirred for 2 hours for later use.

First sintering. With a 36-meter roller kiln, the temperature is set to 840°C, oxygen is introduced, and the gas flow rate is 10 L/min. The mixed materials are loaded into a sagger and transmitted into the roller kiln for sintering, and the constant temperature time is 35 hours. The materials are cooled to room temperature and are pulverized with a jet mill to obtain a first sintering semi-finished product.

Second sintering. With the a 36-meter roller kiln, the temperature is set to 700°C, oxygen is introduced, and the gas flow rate is 10 L/min. The first sintering semi-finished product is loaded into the sagger and transmitted into the roller kiln for sintering, and the constant temperature time is 8 hours. The materials are cooled to room temperature and are pulverized with the jet mill to obtain a second sintering semi-finished product.

Coating treatment. The second sintering semi-finished product is placed into a stirring tank. It starts to stir. 150 kg of deionized water and 1.05 kg of tetrabutyl titanate are added, mixed for 50 min, and filtered to obtain a filter cake.

Third sintering. With the 36-meter roller kiln, the temperature is set to 600°C, oxygen is introduced, and the gas flow rate is 10 L/min. The coated filter cake are loaded into the sagger and transmitted into the roller kiln for sintering, and the constant temperature time is 4 hours. The materials are cooled to room temperature, pulverized with the jet mill, demagnetized and sieved to obtain a cathode material.

The chemical formula of the above-mentioned cathode material is $Li_{1.24}Ni_{0.9}Mn_{0.1}Ti_{0.0051}Ce_{0.02}O_2$ obtained by digesting with dilute hydrochloric acid and detecting nucleic acid with ICP.

**Example 2**

Material mixing. It starts to stir in a 200L plow mixer. 48.99 kg of lithium hydroxide monohydrate, 1.2 kg of cobalt oxide and 100 kg of nickel manganese hydroxide precursor $Ni_{0.8}Mn_{0.2}(OH)_2$ with a particle size $D_v50$ of 4 $\mu$m (available from Guangdong Yingde Jiana Energy Co.) are added, and stirred for 2 hours for later use.

First sintering. With a 36-meter roller kiln, the temperature is set to 890°C, oxygen is introduced, and the gas flow rate is 8 L/min. The mixed materials are loaded into a sagger and transmitted into the roller kiln for sintering, and the constant temperature time is 28 hours. The materials are cooled to room temperature and are pulverized with a jet mill to obtain a first sintering semi-finished product.

Second sintering: With the a 36-meter roller kiln, the temperature is set to 750°C, oxygen is introduced, and the gas flow rate is 8 L/min. The first sintering semi-finished product is loaded into the sagger and transmitted into the roller kiln for sintering, and the constant temperature time is 6 hours. The materials are cooled to room temperature and are pulverized with the jet mill to obtain a second sintering semi-finished product.

Coating treatment. The second sintering semi-finished product is placed into a stirring tank. It starts to stir. 120 kg of deionized water and 1.02 kg of tetrabutyl titanate are added, mixed for 60 min, and filtered to obtain a filter cake.

Third sintering. With the 36-meter roller kiln, the temperature is set to 700°C, oxygen is introduced, and the gas flow rate is 8 L/min. The coated filter cake are loaded into the sagger and transmitted into the roller kiln for sintering, and the constant temperature time is 5 hours. The materials are cooled to room temperature, pulverized with the jet mill, demagnetized and sieved to obtain a cathode material.

The chemical formula of the above-mentioned cathode material is $Li_{1.01}Ni_{0.8}Mn_{0.2}C_{0.016}Tl_{0.0046}O_2$ obtained by digesting with dilute hydrochloric acid and detecting nucleic acid with ICP.

**Example 3**

Material mixing. It starts to stir in a 200L plow mixer. adding 48.18 kg of lithium hydroxide monohydrate, 2.319 kg of tungsten oxide, 2 kg of cobalt carbonate and 100 kg nickel manganese hydroxide precursor $Ni_{0.9}Mn_{0.1}(OH)_2$ with a particle size $D_v50$ of 15 $\mu$m (available from Guangdong Yingde Jiana Energy Comany) are added, and stirred for 2 hours for later use.

First sintering. With a 36-meter roller kiln, the temperature is set to 830°C, oxygen is introduced, and the gas flow rate is 15 L/min. The mixed materials are loaded into a sagger and transmitted into the roller kiln for sintering, and the constant temperature time is 30 hours. The materials are cooled to room temperature and are pulverized with a jet mill to obtain a first sintering semi-finished product.

Coating treatment. The first sintering semi-finished product is placed into a stirring tank. It starts to stir. 100 kg of deionized water and 25.4 kg of rubidium carbonate solution (mixing rubidium carbonate with water in a ratio of 1 : 10) are added, mixed for 40 min, and filtered to obtain a filter cake.

Second sintering. With the 36-meter roller kiln, the temperature is set to 700°C, oxygen is introduced, and the gas flow rate is 15 L/min. The coated filter cake is loaded into the sagger and transmitted into the roller kiln for sintering, and the constant temperature time is 9 hours. The materials are cooled to room temperature, pulverized with the jet mill, demagnetized and sieved to obtain a cathode material.

The chemical formula of the above-mentioned cathode material is $Li_{1.06}Ni_{0.9}Mn_{0.1}Co_{0.02}W_{0.01}Rb_{0.02}O_2$ obtained by digesting with dilute hydrochloric acid and detecting nucleic acid with ICP.

**Example 4**

Material mixing. It starts to stir in a 200L plow mixer. 46.06 kg of lithium hydroxide monohydrate and 100 kg of nickel manganese hydroxide precursor $Ni_{0.85}Mn_{0.15}(OH)_2$ with a particle size $D_v50$ of 2.0 $\mu$m (available from Guizhou Zhongwei Zhengyuan New Materials Co. Ltd.) are added, and stirred for 2 hours for later use.

First sintering. With a 36-meter roller kiln, the temperature is set to 840°C, oxygen is introduced, with the oxygen flow rate of 10 L/min. The mixed materials are loaded into the equipment to perform a first sintering, maintaining the temperature for 16 hours. The materials are cooled to room temperature and are pulverized with a jet mill to obtain a first sintering semi-finished product.

Second sintering. With a 36-meter roller kiln, the temperature is set to 800°C, oxygen is introduced, with the oxygen flow rate of 8 L/min. The obtained first sintering semi-finished product is loaded into the 36-meter orbital kiln for a second sintering, maintaining the temperature constant for 18 hours. The materials are cooled to room temperature, pulverized with the jet mill and then demagnetized to obtain a second sintering semi-finished product.

Coating treatment. The second sintering semi-finished product is placed into a stirring tank. It starts to stir. 100 kg of deionized water is added. The mixture is stirred for 10 min, suction filtered and dried. The dried semi-finished product is placed into a fusion machine for stirring, with 1.77 kg of ammonium heptamolybdate added and mixed for 30 min.

Third sintering. With a 36-meter roller kiln, the temperature is set to 600°C, oxygen is introduced, with the oxygen flow rate of 5 L/min. The coated materials are loaded into the 36-meter orbital kiln for the third sintering, maintaining the temperature at a constant temperature for 10 hours. The materials are cooled to room temperature, pulverized with the jet mill, demagnetized and sieved to obtain a cathode material.

The chemical formula of the above-mentioned cathode material is $Li_{1.04}Ni_{0.85}Mn_{0.15}Mo_{0.01}O_2$ obtained by digesting with dilute hydrochloric acid and detecting nucleic acid with ICP.

**Example 5**

Material mixing. It starts to stir in a 200L plow mixer. 46.94kg of lithium hydroxide monohydrate and 100 kg of nickel manganese hydroxide precursor $Ni_{0.85}Mn_{0.15}(OH)_2$ with a particle size $D_v50$ of 14.0 $\mu$m (available from Guizhou Zhongwei Zhengyuan New Materials Co. Ltd.) are added, and stirred for 2 hours for later use.

First sintering. With a 36-meter roller kiln, the temperature is set to 810°C, oxygen is introduced, with the oxygen flow rate of 12 L/min. The mixed materials are loaded into the equipment to perform a first sintering, maintaining the temperature for 12 hours. The materials are cooled to room temperature and are pulverized with a jet mill to obtain a first sintering semi-finished product.

Coating treatment. The first sintering semi-finished product is placed into a stirring tank. It starts to stir. 100 kg of deionized water is added. The mixture is stirred for 20 min, suction filtered and dried. The dried semi-finished product is placed into a fusion machine for stirring, with 0.4 kg of boron trioxide added and mixed for 30 min.

Second sintering. With the 36-meter roller kiln, the temperature is set to 400°C, oxygen is introduced, with the oxygen flow rate of 5 L/min. The coated materials are loaded into the 36-meter orbital kiln for the third sintering, maintaining the temperature at a constant temperature for 5 hours. The materials are cooled to room temperature, demagnetized and sieved to obtain a cathode material.

The chemical formula of the above-mentioned cathode material is $Li_{1.06}Ni_{0.85}Mn_{0.15}B_{0.005}O_2$ obtained by digesting with dilute hydrochloric acid and detecting nucleic acid with ICP.

**Example 6**

Material mixing. It starts to stir in a 200L plow mixer. 29.07 kg of anhydrous lithium hydroxide, 2.95 kg of strontium carbonate and 100 kg nickel manganese hydroxide precursor $Ni_{0.95}Mn_{0.05}(OH)_2$ with a particle size $D_v50$ of

8.0 μm (available from Guangdong Yingde Jiana Energy Company)are added, and stirred for 2 hours for later use.

First sintering. With a 36-meter roller kiln, the temperature is set to 790°C, oxygen is introduced, and the gas flow rate is 10 L/min. The mixed materials are loaded into a sagger and transmitted into the roller kiln for sintering, and the constant temperature time is 40 hours. The materials are cooled to room temperature and are pulverized with a jet mill to obtain a first sintering semi-finished product.

Coating treatment. The first sintering semi-finished product is placed into a stirring tank. It starts to stir. 100 kg of deionized water and 28.5 kg of magnesium acetate solution (mixing magnesium acetate with water in a ratio of 1 : 10) are added, mixed for 60 min, and filtered to obtain a filter cake.

Second sintering. With the 36-meter roller kiln, the temperature is set to 680°C, oxygen is introduced, and the gas flow rate is 10 L/min. The coated filter cake is loaded into the sagger and transmitted into the roller kiln for sintering, and the constant temperature time is 5 hours. The materials are cooled to room temperature, pulverized with the jet mill, demagnetized and sieved to obtain a cathode material.

The chemical formula of the above-mentioned cathode material is $Li_{1.14}Ni_{0.95}Mn_{0.05}Sr_{0.02}Mg_{0.02}O_2$ obtained by digesting with dilute hydrochloric acid and detecting nucleic acid with ICP of.

**Example 7**

Material mixing. It starts to stir in a 200L plow mixer. 48.18 kg of lithium hydroxide monohydrate, 1.9 kg of strontium carbonate and 100 kg nickel manganese hydroxide precursor $Ni_{0.9}Mn_{0.1}(OH)_2$ with a particle size $D_v50$ of 3.5 μm (available from Guangdong Yingde Jiana Energy Company) are added, and stirred for 2 hours for later use.

First sintering. With a 36-meter roller kiln, the temperature is set to 860°C, oxygen is introduced, and the gas flow rate is 15 L/min. The mixed materials are loaded into a sagger and transmitted into the roller kiln for sintering, and the constant temperature time is 35 hours. The materials are cooled to room temperature and are pulverized with a jet mill to obtain a first sintering semi-finished product.

Second sintering: With the a 36-meter roller kiln, the temperature is set to 750°C, oxygen is introduced, and the gas flow rate is 15 L/min. The first sintering semi-finished product is loaded into the sagger and transmitted into the roller kiln for sintering, and the constant temperature time is 7 hours. The materials are cooled to room temperature and are pulverized with the jet mill to obtain a second sintering semi-finished product.

Coating treatment. The second sintering semi-finished product is placed into a stirring tank. It starts to stir. 100 kg of deionized water and 8.4 kg of aluminium nitrate nonahydrate solution (mixing aluminium nitrate nonahydrate and water in a ratio of 1 : 5) are added, mixed for 40 min, and filtered to obtain a filter cake.

Third sintering. With the 36-meter roller kiln, the temperature is set to 700°C, oxygen is introduced, and the gas flow rate is 15 L/min. The coated filter cake are loaded into the sagger and transmitted into the roller kiln for sintering, and the constant temperature time is 9 hours. The materials are cooled to room temperature, pulverized with the jet mill, demagnetized and sieved to obtain a cathode material.

The chemical formula of the above-mentioned cathode material is $Li_{1.1}Ni_{0.9}Mn_{0.1}Sr_{0.015}Al_{0.003}O_2$ obtained by digesting with dilute hydrochloric acid and detecting nucleic acid with ICP.

**Example 8**

The cathode materials obtained in Example 3 and Example 7 are mixed at a mass ratio of 1 : 1 to obtain a mixed cathode material.

**Example 9**

The cathode materials obtained in Example 3 and Example 7 are mixed at a mass ratio of 7 : 3 to obtain a mixed cathode material.

**Experimental Example 1**

The performance parameters of the high-nickel cathode materials prepared in Examples 1-9 are determined according to the following method.

(1) Method for measuring pore size distribution curve

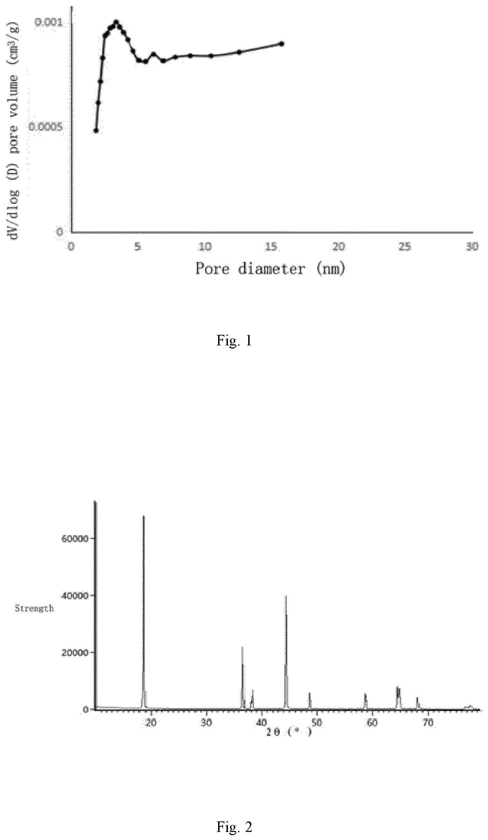

In a Mac automatic specific surface and porosity analyzer (TriStar II 3020), 4g of the cathode powder material is placed in a sample tube for measurement and degassed at 200°C for 1h, thereby sufficiently removing water from the measurement sample. Next, isotherms on the adsorption side and the desorption side are determined by a nitrogen adsorption method using liquid nitrogen in a range of a relative pressure P/Po (Po = about 665 mmHg) of 0.01 to 0.995. The pore size distribution curve is obtained from the pore diameter as the abscissa and the pore volume as the ordinate calculated by the BJH method using the isotherm on the desorption side. The pore size distribution curve of the high-nickel cathode material prepared in Example 7 is shown in Fig. 1. The pore size distribution curve is shown in Fig. 1. It can be seen from Fig. 1 that there is a single peak in the pore size range of 1.5-20 nm on the pore size distribution curve. The pore size ranges of the high-nickel cathode material prepared from Examples 1-9 and results of single point adsorption total pore volumes with a pore size of 1.5-20 nm are shown in Table 3.

(2) Determination method of specific surface area

The specific surface area in the present invention is determined gravimetrically by reference to GB/T 19587-2004 Gas Adsorption BET Method, as determined by the Mac Automatic Specific Surface and Porosity Analyzer (TriStar II 3020). The results are shown in Table 3.

(3) Determination method of particle size

The particle size in the present invention is determined by GB/T19077-2016 Particle Size Analysis-Laser Diffraction Method by Malvern, master Size 2000 Laser Particle Size Analyzer. 1 g of powder is added into 60 ml of pure water, exceeding 5 min. The sample is poured into a sampler for the test and recording the test data. The test results are shown in Table 3.

Master Size 2000 laser particle size analyzer, has a detection angle of 0-135° and the test principle of Mie theory, with external ultrasonic intensity 40 KHz 180w, particle refractive index 1.692, particle absorption rate 1, sample test time 6s, background test snap number 6,000 times, and obscuration degree 8-12%.

(4) XRD test method

X' Pert PRO MPD analyzer, light pipe-Cu target material, wavelength 1.54060, Be window; incident light path-soller slit 0.04 rad, divergence slit 1/2°, shading plate 10 mm, anti-divergence slit 1°; diffraction light path-anti-divergence slit 8.0 mm, seller slit 0.04 rad, large Ni filter; scan range 10°-80°, scan step size 0.013°, dwell time 30.6 s per step, voltage 40 kV, current 40 mA, analysis software High-Score Plus. The X-ray diffraction pattern of the high-nickel cathode material obtained in Example 6 is shown in Fig. 2. The test results of half-peak width FWHM (101) corresponding to the diffraction peak close to (101) the diffraction angle $2\Theta$ of 36.6° for the high-nickel cathode materials obtained in Examples 1 to 9 are shown in Table 3.

(5) Method for testing tap density

m (50g $\pm$ 0.5g) powder is weighed and filled into the measuring cylinder 100 ml. The bottom of measuring cylinder fully filled with materials. The scale on the upper edge of materials is read and recorded as $V_1$. The measuring cylinder filled with powder is placed on the BT-303 tapping equipment for fixation, and setting the parameters: the amplitude 3 $\pm$ 0.1 mm, and the number of vibrations 3000. The equipment is started. After the end of the vibrations, the measuring cylinder is removed. The upper edge scale $V_2$ of the powder is read, and the tap density = $(V_1-V_2)/m$. The test results are shown in Table 3.

(6) Test method for total free lithium content

30 g $\pm$ 0.01g sample is accurately weighed. The sample is put into a 250 ml conical flask which is put into a magnetic stirrer and added with 100ml deionized water. The conical flask is placed on the magnetic stirrer which is turned for stirring for 30 minutes. The mixed solution is filtered with a hardened filter paper and a funnel. 50 ml filtrate is transfered by a 50 ml pipette and put into a 100 ml beaker, with a magnet added in. The beaker is placed on the magnetic stirrer, with 2 drops of phenolphthalein indicator added in. It is titrated with 0.05 mol/L hydrochloric acid standard volumetric solution until the color of solution changes from red to colorless, and the volume $V_1$ of 0.05 mol/L hydrochloric acid standard volumetric solution (endpoint 1) is recorded. 2 drops of methyl red indicator is added, with the color of indicator changed from colorless to yellow. It is titrated with 0.05 mol/L hydrochloric acid standard titration solution until the color of solution changes from yellow to orange. The beaker is placed on a heating furnace and heated until the solution boils (the color of the solution changes from orange to yellow). The beaker is removed and cooled to room temperature. The beaker is placed on the magnetic stirrer and titrated with 0.05 mol/L hydrochloric acid standard volumetric solution until the color of solution changes from yellow to light red, and the volume $V_2$ of 0.05 mol/L hydrochloric acid standard volumetric solution (endpoint 2) is recorded. The amount of free total lithium is calculated according to the following formula, and the test results are shown in Table 3.

$$\text{Total amount of free lithium} = V_2 \times 0.05 \times 6.94 \times 2 \times 100\% / (m \times 1000);$$

The unit of total amount of free lithium is quality percentage(%);

m is the mass of the sample, the unit of m is g;
$V_2$ is a second titration endpoint, the unit of $V_2$ is mL;
6.94 is the atomic weight of lithium.

Table 3 Performance parameters test results for the preparation of high-nickel cathode materials in Examples 1-9

| | Pore size range nm | Single point adsorption total pore volume, g/cm³ | Tap density g/cm³ | FWHM (101) | Specific surface area m²/g | Total lithium amount ppm | Particle size μm |
|---|---|---|---|---|---|---|---|
| Example 1 | 1.7-18.3 | 0.0043 | 1.93 | 0.133 | 0.95 | 859 | 3.6 |
| Example 2 | 1.9-18.4 | 0.0025 | 2.06 | 0.112 | 0.85 | 783 | 4.0 |
| Example 3 | 1.8-18.4 | 0.0016 | 2.38 | 0.118 | 0.35 | 1083 | 17.3 |
| Example 4 | 1.8-18.3 | 0.0015 | 2.11 | 0.126 | 0.61 | 680 | 4.5 |
| Example 5 | 1.7-18.2 | 0.0016 | 2.35 | 0.093 | 0.33 | 982 | 15.8 |
| Example 6 | 1.8-18.3 | 0.0024 | 2.29 | 0.114 | 0.38 | 821 | 10.3 |
| Example 7 | 1.8-18.4 | 0.0022 | 2.07 | 0.129 | 0.78 | 891 | 3.5 |
| Example 8 | 1.7-18.3 | 0.0026 | 2.42 | 0.131 | 0.68 | 985 | 13.4 |
| Example 9 | 1.8-18.2 | 0.0023 | 2.39 | 0.125 | 0.52 | 1020 | 15.5 |

**Experimental Example 2**

Preparation and performance evaluation of lithium ion batteries

The 454261 soft pack battery is prepared as follows.

cathode preparation. The high-nickel cathode materials prepared in Examples 1-9 of the present invention, and conductive carbon black (S. P) and polyvinylidene fluoride (PVDF) as a binder in a weight ratio of 94 : 3 : 3 are added into N-methyl pyrrolidone (NMP) (the weight ratio of cathode material to NMP is 2.1 : 1), mixed thoroughly, stirred to form a uniform slurry, coated on an aluminum foil current collector, dried and pressed into an electrode sheet.

Anode preparation. The anode artificial graphite, and conductive carbon black (S. P), carboxymethyl cellulose (CMC) and an adhesive (SBR) in a weight ratio of 95 : 1 : 1 : 3 are added into a sufficient amount of pure water, mixed, stirred to form a uniform slurry, coated on a copper foil current collector, dried and pressed into an electrode sheet.

The diaphragm is a PP/PE composite film material. The pressed positive and anode sheets are spot-welded with an electrode lug, inserted into a diaphragm, wound on a winding machine, loaded into a soft package fixture, subjected to top and side sealing, and then placed into an oven for baking. After that, 9 g of electrolyte is injected in an environment with a relative humidity of less than 1.5%, and the mass ratio of the electrolyte used is a mixed solvent of EC : DEC : DMC = 1 : 1 : 1. The electrolyte is 1 M lithium hexafluorophosphate. With liquid injection, after formation for 48 hours, the vacuum sealing is performed. The cell model is 454261.

The battery is tested for performance on a Hankow cell tester according to the following method.

1) Capacity test

The prepared soft pack battery is connected to the test frame and the test procedure starts. Setup steps. The test temperature is set to 25°C, standing for 4h. It is charged at constant current and constant voltage for 4h (such as 1/3C, charged to 4.2V), paused, standing, discharged at constant current (such as 1/3C, cut-off voltage 3.0V) so as to obtain the capacity under this current and voltage. The previous steps are repeated to obtain the capacity data under different current and voltage conditions.

2) Cycle testing

The battery subjected to the above capacity test is connected to the test rack to start the test procedure. The setting steps include test temperature 45°C, standing for 4 hours, charging at constant current for 4 hours (such as 1C, charged to 4.2V, or 1C, charged to 4.3V), converting to constant voltage charge (such as 4.2V for 2h, or 4.3V for 2h), standing for 5 minutes, discharging at constant current for 4 hours (such as 1C, cut-off voltage of 3.0V), and standing for 5 minutes. The previous steps of constant current charge are repeated for conducting cyclic test, so as to obtain the capacity retention rate with different voltage and different cycle times.

3) Cyclic DC Internal Resistance (DCR) Growth Test

In the step of cycle test described in 2), before the constant current discharge, a step of constant current discharge for 30 seconds is added (the voltage difference within 30 seconds is recorded and then divided by the current, so as to obtain DCR). The others are unchanged. By repeating the previous steps of constant current charging and performing the cycle test, the growth rate of DCR at different cycle times can be obtained (dividing the difference between DCR after this cycle and DCR after the first cycle by DCR after the first cycle), and the test results are shown in Table 4.

4) Rate performance

The prepared soft pack battery is connected to the test frame and the test procedure starts. Setting steps includes setting the test temperature to 25°C, standing for 4 hours, charging to 4.2V at 1/3C constant current and constant voltage, cutting off current to 0.02C, pausing, standing, and discharging to 3.0 V at 1/3C, recording the 1/3 C discharge specific capacity of the battery; standing for 4 hours, charging to 4.2V at 1C constant current and constant voltage, cutting off current 0.02C, pausing, standing, discharging to 3.0V at 1C constant current, recording the 1C discharge specific capacity of the battery; and standing for 4 hours, charging to 4.2V at 2C constant current and constant voltage, cutting off current 0.02C, pausing, standing, discharging to 3.0V at 2C constant current, and recording the specific capacity of 2C discharge.

Table 4 Cycle Performance Test Results

| | cathode material | Rate performance (specific discharge capacity, mAh/g) 4.2 V-3.0 V, 2C | Capacity (mAh/g) 4.2 V-3.0 V, 1/3C | Capacity retention ratio 4.2 V-3.0 V, 1C, 45°C, 200 cycles | Capacity (mAh/g) 4.3V-3.0 V, 1/3C | DCR growth rate 4.2 V-3.0V, 1C, 45°C, after 200 cycles |
|---|---|---|---|---|---|---|
| BA-S1 | Example 1 | 187.1 | 194.7 | 92.0% | 203.7 | 30.0% |
| BA-S2 | Example 2 | 175.3 | 181.0 | 94.0% | 195.2 | 27.3% |
| BA-S3 | Example 3 | 189.5 | 196.4 | 89.0% | / | 19.0% |
| BA-S4 | Example 4 | 180.8 | 187.0 | 94.0% | 201.3 | 26.5% |

(continued)

| | cathode material | Rate performance (specific discharge capacity, mAh/g) | Capacity (mAh/g) | Capacity retention ratio | Capacity (mAh/g) | DCR growth rate |
|---|---|---|---|---|---|---|
| | | 4.2 V-3.0 V, 2C | 4.2 V-3.0 V, 1/3C | 4.2 V-3.0 V, 1C, 45°C, 200 cycles | 4.3V-3.0 V, 1/3C | 4.2 V-3.0V, 1C, 45°C, after 200 cycles |
| BA-S5 | Example 5 | 181.7 | 189.4 | 90.0% | / | 19.4% |
| BA-S6 | Example 6 | 194.6 | 200.7 | 87.0% | / | 29.0% |
| BA-S7 | Example 7 | 187.3 | 193.6 | 94.0% | 202.8 | 23.0% |
| BA-S8 | Example 8 | 189.6 | 194.3 | 92.0% | / | 21.8% |
| BA-S9 | Example 9 | 191.7 | 195.2 | 90.6% | / | 20.3% |

It can be seen from Table 3 that the high-nickel cathode material for lithium ion batteries prepared in Examples 1-9 of the present invention has a pore size of 1.5-20nm and a single-point adsorption total pore volume within 0.0043 g/cm$^3$ when measured by the nitrogen adsorption method. The cathode material is a porous structure with a pore size within a range of 1.7-19 nm. The high-nickel cathode material prepared in the present invention has a tap density of greater than 1.9 g/cm$^3$, a specific surface area of 0.33-0.95 m$^2$/g, and a $D_v50$ particle size of 3.3-17.3 $\mu$m. The results of XRD diffraction shows that the cathode material has a half-peak width FWHM (101) of 0.093-0.133 at a diffraction peak close to (101) a diffraction angle $2\Theta$ of 36.6° in the powder X-ray diffraction pattern.

As can be seen from Table 4, the lithium ion battery prepared by the high-nickel cathode materials for the lithium ion batteries prepared in Examples 1-9 of the present invention has a capacity of 181-200.7 mAh/g at 1/3C current and 4.2V, a specific discharge capacity of 175.3-194.6 mAh/g at 2C current, a capacity retention of 87-94% after 200 cycles at 4.2V, and a DCR growth rate of 19-30% after 200 cycles at 4.2V The high-nickel cathode material prepared in the present invention has a smaller pore size, provides more paths for the migration of lithium ions and has a shorter path, with a higher capacity and a better rate performance. The cathode material has a half-peak width FWHM (101) of 0.093-0.133 at a diffraction peak close to (101) a diffraction angle $2\Theta$ of 36.6° in the powder X-ray diffraction pattern, so that the material has a better structural stability, a better capacity retention rate and a less increase in direct current internal resistance. According to Examples 8 and 9 of the present invention, a mixture of cathode materials with different particle sizes, so that the tap density of the high-nickel cathode material for the lithium ion battery is improved more, the capacity and cycling performance are better matched, and the increase in direct current internal resistance is also smaller.

In summary, compared with a conventional cathode material for lithium ion batteries, a cobalt-free high-nickel cathode material for lithium ion batteries is obtained by adding a modifying element and at least two sintering and one coating treatments. The high-nickel cathode material has a unique porous structure and crystal structure, the porous structure of the cathode material provides more paths for the migration of lithium ions and has a shorter path, so that the lithium ion battery has not only a higher capacity and a good rate performance, but also the crystal structure enables the material to have a good structural stability. Therefore, during the charging and discharging process of the lithium ion battery, the capacity decline is reduced, the cycle performance is good, and the increase of direct current internal resistance is small. The capacity, rate and cycle performance of the cobalt-free cathode material are effectively balanced.

The above mentioned is only preferred embodiments of the invention and is not a limitation to the invention in any form. Any modification, equivalent replacement and improvement made in the spirit and principle of the invention shall be included in the scope of protection of the invention.

**Claims**

1. A high-nickel cathode material for lithium ion batteries, **characterized in that** the high-nickel cathode material has a porous structure, wherein the high-nickel cathode material comprises elements constituting the chemical formula 1 thereof $Li_{1+a}Ni_bMn_cA_dO_2$, where 0.01 $\leq$a$\leq$0.24, 0.79<b<0.96, 0.01<c<0.20, 0<d<0.06; and A is selected from the group consisting of any one or two or more of Mn, Co, Al, Zr, Y, Rb, Cs, W, Ce, Mo, Ba, Ti, Mg, Ta, Nb, Ca, V, Sc, Sr and B, or A is selected from a phosphorus-containing compound containing at least one of Ti, Al, Mg, Zr, La and Li.

2. The high-nickel cathode material for lithium ion batteries according to claim 1, **characterized in that** a BJH pore size distribution curve has a unimodal or multimodal pore size distribution in the range of pore sizes 1.5-20 nm, when measured by the nitrogen adsorption; and the high-nickel cathode material has a single point adsorption total pore volume within 0.01 $g/cm^3$, preferably within 0.007 $g/cm^3$, in the range of pore sizes 1.5-20 nm.

3. The high-nickel cathode material for lithium ion batteries according to claim 1 or 2, **characterized in that** the cathode material has a half-peak width FWHM (101) of 0.080-0.180 at a diffraction peak close to (101) a diffraction angle $2\Theta$ of 36.6° in a powder X-ray diffraction pattern.

4. The high-nickel cathode material for lithium ion batteries according to any one of claims 1-3, **characterized in that** the cathode material $D_V50$ has a particle size of 3-20 $\mu$m.

5. The high-nickel cathode material for lithium ion batteries according to any one of claims 1-4, **characterized in that** the cathode material has a specific surface area of 0.33-1.5 $m^2/g$; and/or

   the cathode material has a tap density of $\geq$ 1.9 $g/cm^3$; and/or
   the cathode material has a total free lithium content of < 1800 ppm.

6. The high-nickel cathode material for lithium ion batteries according to any one of claims 1-5, wherein in the chemical formula 1, $0.001 \leq d \leq 0.04$.

7. A preparation method for the high-nickel cathode material for lithium ion batteries according to any one of claims 1-6, **characterized in that** the method comprises at least two sintering and one coating treatment after mixing raw materials.

8. The preparation method according to claim 7, **characterized in that** the first sintering temperature is 700-900°C, preferably 790-890°C; further preferably, the constant temperature time is 8-40 hours; and/or

   the second sintering temperature is 400°C-800°C, preferably 680-800°C; further preferably, the constant temperature time is 5-20 hours;
   more preferably, the sintering atmosphere is oxygen.

9. The preparation method according to claim 7 or 8, **characterized in that** the coating treatment is performed before the final sintering.

10. The preparation method according to any one of claims 7-9, **characterized in that** a Li source is a lithium-containing oxide, a lithium-containing fluoride, or a lithium-containing salt; preferably the Li source is one or two or more selected from the group consisting of anhydrous lithium hydroxide, lithium hydroxide monohydrate, lithium carbonate, lithium nitrate, lithium acetate, and lithium fluoride.

11. A high-nickel cathode material for lithium ion batteries, **characterized by** being prepared by the preparation method according to any one of claims 7-10.

12. A high-nickel cathode material for lithium ion batteries, **characterized by** comprising two or more of the cathode materials according to any one of claims 1-6 or claim 11.

13. A cathode for lithium ion batteries, **characterized by** comprising a current collector and a cathode material loaded on the current collector, wherein the cathode material is the high-nickel cathode material for lithium ion batteries according to any one of claims 1-6 or claim 11 or claim 12.

14. A lithium ion battery, **characterized by** comprising a cathode, an anode, and an electrolyte containing a lithium salt, wherein the cathode is the lithium ion battery cathode according to claim 13.

15. An application of the high-nickel cathode material for lithium ion batteries according to any one of claims 1-6 or claim 11, or the high-nickel cathode material for lithium ion batteries according to claim 12, or the cathode for lithium ion batteries according to claim 13, or the lithium ion battery according to claim 14, in the field of digital batteries, power batteries or energy storage batteries.

Fig. 1

Fig. 2

| | Europäisches Patentamt |
|---|---|
| | European Patent Office |
| | Office européen des brevets |

## EUROPEAN SEARCH REPORT

Application Number

EP 22 21 7034

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 176 583 A (HUNAN JINFULI NEW ENERGY CO LTD) 27 August 2019 (2019-08-27)<br>* example 5 * | 1-15 | INV.<br>H01M4/36<br>H01M4/525 |
| X | EP 3 909 916 A1 (LG CHEMICAL LTD [KR]) 17 November 2021 (2021-11-17)<br>* figures; examples * | 1,4,<br>12-15 | |
| X | EP 3 875 434 A1 (SAMSUNG SDI CO LTD [KR]; ULSAN NAT INST SCIENCE & TECH UNIST [KR]) 8 September 2021 (2021-09-08)<br>* para.[0061], examples & figures * | 1-15 | |

TECHNICAL FIELDS
SEARCHED (IPC)

C01G
H01M

The present search report has been drawn up for all claims

| Place of search | Date of completion of the search | Examiner |
|---|---|---|
| Munich | 14 June 2023 | Munro, Brian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**EP 4 216 308 A1**

## ANNEX TO THE EUROPEAN SEARCH REPORT
## ON EUROPEAN PATENT APPLICATION NO.

EP 22 21 7034

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2023

| Patent document cited in search report | | Publication date | Patent family member(s) | | Publication date |
|---|---|---|---|---|---|
| CN 110176583 | A | 27-08-2019 | NONE | | |
| EP 3909916 | A1 | 17-11-2021 | CN | 113412239 A | 17-09-2021 |
| | | | EP | 3909916 A1 | 17-11-2021 |
| | | | JP | 7230220 B2 | 28-02-2023 |
| | | | JP | 2022519233 A | 22-03-2022 |
| | | | KR | 20210039963 A | 12-04-2021 |
| | | | US | 2022106199 A1 | 07-04-2022 |
| | | | WO | 2021066574 A1 | 08-04-2021 |
| EP 3875434 | A1 | 08-09-2021 | CN | 113363472 A | 07-09-2021 |
| | | | EP | 3875434 A1 | 08-09-2021 |
| | | | JP | 7165769 B2 | 04-11-2022 |
| | | | JP | 2021141066 A | 16-09-2021 |
| | | | KR | 20210112673 A | 15-09-2021 |
| | | | US | 2021280866 A1 | 09-09-2021 |

EPO FORM P0459

**REFERENCES CITED IN THE DESCRIPTION**

**Patent documents cited in the description**

- CN 102280636 A
- CN 108123119 A
- CN 1856890
- CN 104272520 A
- CN 112993239 A
- CN 108963218A A
- CN 112811475 A
- CN 112750999 A